# EUROPEAN PATENT SPECIFICATION

(11) **EP 3 267 163 B1**
(45) Date of publication and mention of the grant of the patent: **31.03.2021**
(21) Application number: 17156016.2
(22) Date of filing: 14.02.2017
(51) Int. Cl.: G01F 1/075, G01F 9/00, G01D 4/00, G06Q 30/02, G06Q 50/12, G01F 15/06

(54) **METHOD AND APPARATUS FOR MONITORING CONSUMPTION OF FLOWING SUBSTANCE**
VERFAHREN UND VORRICHTUNG ZUR ÜBERWACHUNG DES VERBRAUCHS VON FLIESSENDEN SUBSTANZEN
PROCÉDÉ ET APPAREIL PERMETTANT DE SURVEILLER LA CONSOMMATION D'UNE SUBSTANCE S'ÉCOULANT

(30) Priority: 08.07.2016 FI 20165569
(43) Date of publication of application: 10.01.2018
(73) Proprietor: Streamsave Oy, 90460 Oulunsalo (FI)
(72) Inventor: Syrjälä, Teppo, 90460 Oulunsalo (FI)
(74) Representative: Kolster Oy Ab

(56) References cited:
- WO-A1-2010/075848
- WO-A2-2015/121636
- CA-A1- 2 593 568
- US-A1- 2011 203 364
- US-A1- 2014 117 780
- US-A1- 2015 253 163
- US-B1- 7 099 781
- US-B1- 9 335 297
- US-B2- 7 671 480

## Description

### Technical Field

The exemplary and non-limiting embodiments of the invention relate generally to monitoring consumption of fluid substance, such as water.

### Background

Water, especially fresh or potable water is a limited resource in many places around the world. Even if water is readily available heating water for example for showering takes a lot of energy. It has been estimated that showering with warm water is one of the main contributors for water and energy consumption. Even small reductions in consumption may lead to considerable savings in a household. However, it is difficult to monitor the consumption while in the shower.

US 2015/0253163, WO 2010/075848, US 9335297, US 2011/0203364 , CA2593568 and US 7099781 disclose solutions for water consumption monitoring.

### Brief description

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

According to an aspect of the present invention, there is provided apparatus of claim 1.

According to an aspect of the present invention, there is provided method of claim 7.

Some embodiments of the invention are disclosed in the dependent claims.

### Brief description of the drawings

In the following the invention will be described in greater detail by means of preferred embodiments with reference to the attached drawings, in which
Figure 1 illustrates a simplified example of an apparatus of an embodiment;
Figure 2 is a flowchart illustrating an embodiment;
Figure 3 illustrates an example of the use of indicators;
Figure 4 illustrates an example of a communication environment of the apparatus;
Figure 5 is a flowchart illustrating an example of the communication of an external device with the apparatus of an embodiment;
Figure 6 is a flowchart illustrating an example of communication of an external device with a server;
Figure 7 illustrates a simplified example of an apparatus of an embodiment.

### Detailed description of some embodiments

Some exemplary embodiments of the present invention will now be described more fully hereinafter with reference to the accompanying drawings. The invention may be embodied in many different forms and should not be construed as limited to the embodiments set forth herein. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

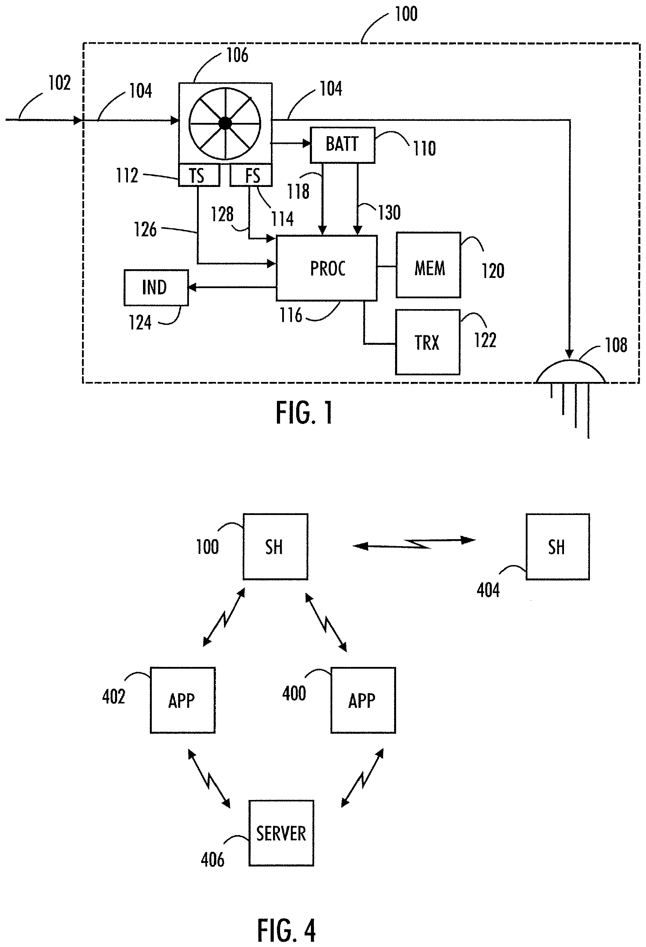

Figure 1 illustrates an example of an apparatus 100 for monitoring consumption of flowing matter substance such as water. The apparatus may be installed at the end of a pipe 102 where fluid is flowing. In an embodiment, the apparatus is removably connected to a pipe 102 of a shower in the place of a regular shower head. The pipe 102 may be of flexible material. In the following non-limiting examples the fluid is assumed to be water.

In an embodiment, the apparatus comprises a standard connector used in shower heads. The apparatus may be connected in the place of a regular shower head and it may be visually similar to a regular shower head.

The apparatus comprises a generator 106 configured to generate electric power from the water passing 104 through the generator. In an embodiment, when the apparatus is replacing a regular shower head, the water coming from the pipe102 is led 104 via the generator 106 to a nozzle 108.

In an embodiment, the generator stores the generated power into a battery 110. The battery may be realised with various means known in the art. For example, one or more capacitors may be used. The battery may provide the apparatus energy when the generator is not generating energy.

The apparatus comprises a processing unit 116. The processing unit is configured to receive power from the generator 106 either directly or 118 via the battery 110. A memory 120 may be operationally connected to the processing unit. The memory may store software and data for the use of the processing unit, for example. In an embodiment, the processing unit may configured to receive 130 from the battery information on the available power stored in the battery and control the operation of the apparatus on the basis of the information.

The apparatus : comprises a first sensor 112 configured to measure the temperature of the water coming from the pipe 102 and flowing through the apparatus. The first sensor may be connected 126 to the processing unit 116.

The apparatus further comprises a second sensor 114 configured to measure the amount of water coming from the pipe 102 and flowing through the apparatus. The second sensor may be connected 128 to the processing unit 116. The second sensor measuring the amount of water is realised with the generator by estimating the amount of water from the electricity generated by the generator.

The apparatus comprises a wireless transceiver 122 operationally connected to the processing unit 116. The wireless transceiver 122 may be a Bluetooth® transceiver or a Wireless Local Area Network (WLAN) transceiver based on IEEE 802.11 standard, for example. IEEE refers to the Institute of Electrical and Electronics Engineers. Bluetooth® and WLAN are merely illustrative examples as any other transmission technology may also be used as well.

The apparatus may further comprise a set of indicators 124. The indicators may be LEDs (light emitting diodes), other visible indicators such as a display, a vibrating unit or a speaker, for example.

It may be noted that although the apparatus is described above as a replacement for a shower head it is not limited to that example. The apparatus may be used to monitor water usage in different applications such as water taps and also for monitoring different fluids such as gasoline or gas, for example.

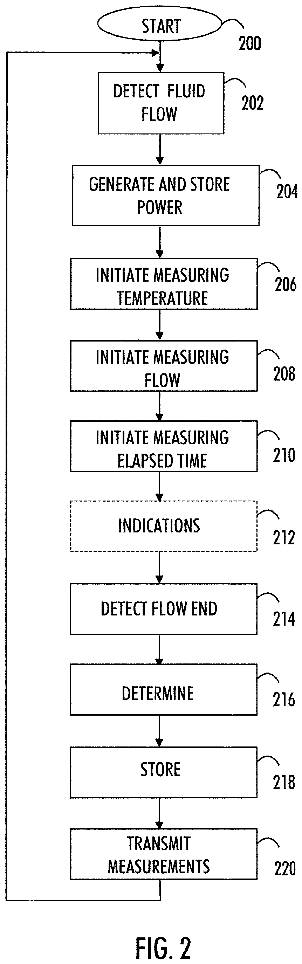

Figure 2 is a flowchart illustrating an embodiment of the operation of the apparatus. The process starts at step 200.

In step 202, the apparatus is configured to detect that fluid starts flowing in the pipe at a first time instant. When the water starts flowing in the pipe 102 due to a user operation, for example, the water enters the apparatus and starts flowing through the generator 104.

In step 204, the generator starts storing power to the battery 106 which feeds the processing unit 106. The processing unit may be in a sleep state or in off state when the water is not flowing but it may be woken up or switched to on state when the water starts flowing. The processing unit may woke up as a response to the power received from the generator via the battery, for example. The signal from the transceiver may also wake the unit.

In step 206, the apparatus is configured to start measuring of the temperature of the water flowing in the pipe. The measurement is performed by the first sensor 112 and processing unit receives and controls the measurement.

In step 208, typically simultaneously with step 206, the apparatus is configured to start measuring of the amount of water flowing in the pipe. The measurement is performed by the second sensor 114 and processing unit receives and controls the measurement.

In step 210, the apparatus is configured to initiate measurement of time elapsed since the first time instant. Processing unit may initiate a timer to measure the elapsed time, for example.

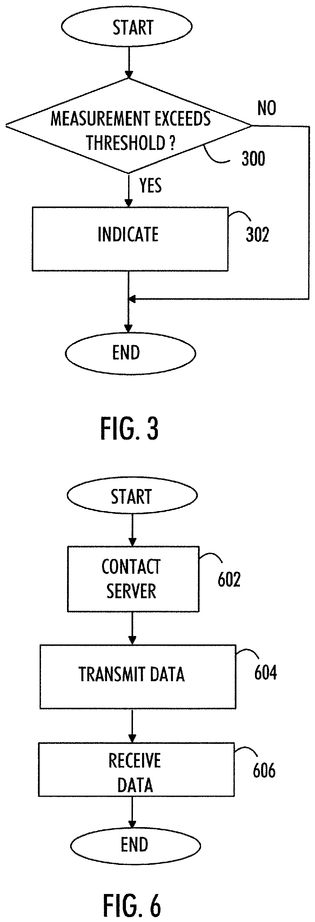

In an embodiment, in step 212, the apparatus is configured to show indications on the basis of one or more measurements. Indications are explained later in connection with Figure 3.

In step 214, the apparatus is configured to detect that the water stops flowing in the pipe at a second time instant.

In step 216, the apparatus is configured to determine the amount of fluid that flowed through the pipe between the first and the second time instant and determine the temperature of the fluid between the first and the second time instant.

In step 218, the apparatus is configured to store the determined values and the time elapsed between the first and the second time instants as an entry in the memory.

In step 220, the apparatus is configured to control the transceiver to transmit the entry. The transmission may be performed directly after storing or several entries may be transmitted together at a later time instant. Communication with other devices is explained below in connection with Figures 4 and 6.

Figure 3 illustrates an example of the use of indicators. The apparatus is measuring amount of water flowing through the apparatus and the time elapsed since the water started flowing. In an embodiment, the apparatus compares 302 the measurements to given thresholds, and if a threshold is exceeded an indication 304 is given using the indicators. For example, if water is flowing through the apparatus longer than a given time threshold T1, the processing unit may light a red LED to indicate to the user that he/she has spent a long time in the shower.

In an embodiment, more than one different indicator and threshold may be used. For example, the apparatus may comprise LEDS of different colours, such as red, yellow and green, for example. When user turns the shower on, a green LED is lit. When time passes and a given threshold T1 is exceeded green LED is put off and yellow LED is lit. When time elapsed since the beginning of the shower exceeds another threshold T2, yellow LED is put off and red LED is lit.

In an embodiment, the indicators may be a set of LEDs or lights, and each time a threshold is exceeded a new indicator is lit in addition to already lit indicators.

In an embodiment, indicators are lit when a threshold is exceeded multiple times. For example, first indicator is lit when a measured unit exceeds a threshold. When the measured unit exceeds the threshold multiplied by two, a second indicator is lit, and so on.

In an embodiment, the LEDs are situated near the nozzle in such a manner that the water flowing through the nozzle is coloured. In an embodiment, the LEDs may be in another part of the apparatus, or they may be located in more than one part of the apparatus.

In an embodiment, a sound from a speaker may be an indication. The sound may be music, speech or an alarm, for example.

In an embodiment, the indicator may be a unit configured to vibrate.

In an embodiment, the indicator may be a small monochrome or colour display.

The thresholds may be stored in the memory of the apparatus and they may be configurable.

Thus, the apparatus may give instant feedback to the user of the shower. The user may monitor the way he/she uses the shower and make changes if a reduction in the consumption is needed, for example.

As the apparatus may be connected at the place of a regular shower head, the installation is easy and can be done without any tools or professional help.

Figure 4 illustrates an example of a communication environment of the apparatus. As mentioned above, the apparatus comprises a wireless transceiver 122 operationally connected to the processing unit 116. The wireless transceiver 122 may be a Bluetooth® or Bluetooth® low energy (Bluetooth LE, BLE or Bluetooth Smart) transceiver or a Wireless Local Area Network (WLAN) transceiver based on IEEE 802.11 standard, for example. Any other transmission technology may also be used as well.

In an embodiment, the processing unit may control the transmitter to initiate communication with a transceiver external to the apparatus 100. The external apparatus or device the apparatus 100 is communicating with may basically be any apparatus or device comprising a suitable transceiver. The apparatus 100 may communicate with more than one external transceiver. The external apparatus or device 400, 402 may be a mobile phone, a tablet computer or a personal computer, a terminal equipment, a router or base station, for example.

For example, in Bluetooth® and WLAN technologies the transceivers may be configured to set up a connection whenever two transceivers paired together come to a common coverage area. Pairing means that both transceivers have stored parameters with which they can recognise each other for communication.

In an embodiment, the apparatus 100 is configured to transmit the entries stored in the memory of the apparatus to the external apparatus or device 400, 402. The transmission may be performed directly after storing or several entries may be transmitted together at a later time instant.

In an embodiment, the apparatus 100 is configured to receive data from the external apparatus or device 400, 402. The data may be the thresholds used in the control of the indicators, for example. In addition, other data related to the indicators may be received, such as sound or sounds to be played.

In an embodiment, the external device 400, 402 may be configured to communicate with one or more servers 406 located in a communication network such as the Internet, for example. The servers 406 may store the entries received from the apparatus 100 or contain data which may be utilised in the apparatus 100 or in the external device 400, 402.

The external device 400, 402 may be configured to process the data received from the apparatus 100. The external device may comprise suitable software configured to process and display data related to entries received form the apparatus 100. For example, the consumption of water and energy and costs related to the consumption of the water in the apparatus may be monitored. All data may be sent to the network server which may store the data and where the data may be further processed in needed.

For example, the external device may display daily, weekly or monthly values related to the consumption of water and energy and costs related to the consumption of the water in the apparatus. Thus, the user may in a detailed manner and during a long time span monitor the way he/she uses the shower and make changes if a reduction in the consumption is needed, for example. The costs related to the use of the shower are thus readily available.

The external device may fetch the parameters related to the costs of the amount of water and heating of the water from the server 406 or the parameters may be given by the user.

In an embodiment, the external device may upon installation of the software fetch default parameters on the basis of the location of the apparatus 100 or the external device 400, 402 from the server 406 and the user may provide more accurate parameters if need be.

In an embodiment, the external device comprises a location unit, such as a satellite positioning receiver (Global Positioning System, GPS or Globalnaja navigatsionnaja sputnikovaja sistema ttuis, GLONASS, for example) with which the device may determine the location of the device. The device may inform the location to the server, which on the basis on the location is configured to select information to be set to the device.

In different locations different parameters may be important. For example, in some countries water as such is freely available for a relatively low price, but generating warm water is expensive. In other countries water is an expensive resource but generating warm water is cheap.

No other external devices are needed in the process. The apparatus 100 itself functions as a shower head and the external device 400 may be the mobile phone, a tablet or a computer of the user. The use of the network server is optional as the user may type required parameters into the external device 400. The software for the external device 400, 402 may be loaded from a suitable application store.

In an embodiment, the external device 400 may provide the user or users of the apparatus incentives for limiting the use of water. For example, the external device 400 may offer virtual prizes if the consumption of water during a given time period is below a given thresholds or is smaller than during a previous corresponding time period.

In an embodiment, the apparatus 100 is configured to communicate with another similar apparatus 404. As explained below, the apparatus 100 receives information on the total volume or capacity of the warm water storage of the facility the apparatus 100 is installed in. Thus, the apparatus is aware of the total amount of warm water available and the amount of warm water passed through the apparatus. If the apparatus is the only one using warm water, it activates an indicator when the used amount of warm water approaches the capacity of the warm water storage in the facility. If there are more than one apparatus in the facility, the apparatuses i communicate with each other and exchange information about the used amount of warm water and the capacity of the warm water storage, for example.

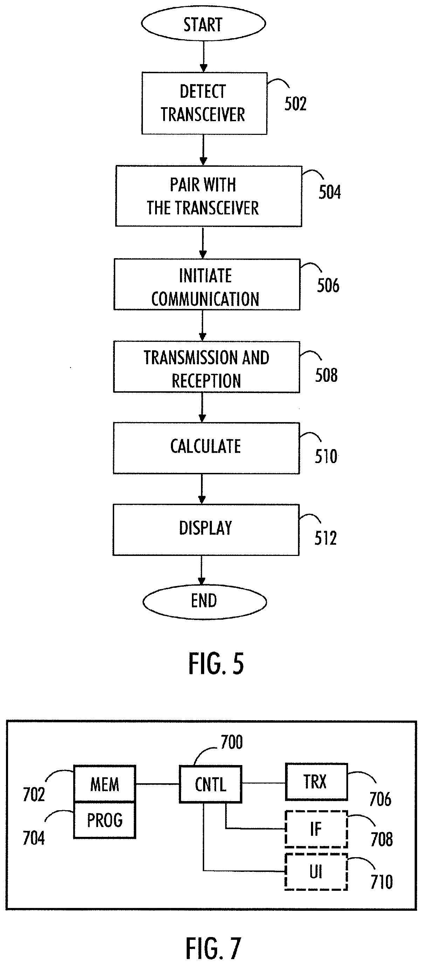

As an example helping to understand the invention, the flowchart of Figure 5 illustrates the communication of the external apparatus or device 400, 402 with the apparatus 100.

In step 502, the external device 400, 402 is configured to detect the transceiver of the apparatus 100.

In step 504, the transceiver of the external device 400, 402 and the transceiver of the apparatus 100 are paired for communication. The steps 502 and 504 may be performed according to the communication technology used.

In step 506, the external device 400, 402 is configured to initiate communication with the apparatus 100.

In step 508, the external device 400, 402 is configured to receive data from the apparatus 100 and transmit data to the apparatus 100. For example, the external device may receive entries stored in the apparatus 200. The external device may transmit parameters such as thresholds to the apparatus. If there is no need to update the thresholds, it may be that the external device only receives data from the apparatus.

In an embodiment, the external device 400, 402 is configured to transmit other data to the apparatus 100, such as the total volume or capacity of the warm water storage in the facility the apparatus 100 is installed. The external device 400, 402 may receive the information from the user of the apparatus, for example.

In an embodiment, in step 510, the external device 400, 402 is configured to obtain from a memory of the device information related to the costs of the consumption and heating of water and calculate values on the basis of the entries received from the apparatus 100 and the information. As mentioned above, the external device may calculate daily, weekly or monthly values for the consumption of water and energy in the apparatus and costs related to the consumption of the water in the apparatus 100.

In an embodiment, in step 512, the external device 400, 402 is configured to display the calculated values.

As an example helping to understand the invention, the flowchart of Figure 6 illustrates the communication of the external apparatus or device 400, 402 with the server 406.

In step 602, the external device 400, 402 is configured to contact the server 406. The communication may utilise Internet Protocol or other suitable protocol known in the art. The communication may be encrypted.

In step 604, the external device 400, 402 is configured to transmit data received from the apparatus 100 to the server. The data may be the entries received from the apparatus 100 as such or it may be data processed by the external apparatus.

In step 606, the external device 400, 402 is configured to receive data from the server. The data may be data which may be utilised in the apparatus 100 or in the external device 400, 402. For example, the data may comprise the thresholds or information related to the costs of the consumption and heating of water. As mentioned, the external device 400, 402 may be configured transmit information on the location of the device to the server.

The data may comprise pricing information from the local water company. In addition, the data may comprise reference data related to general water or energy consumption. The reference data may be location specific. For example, the reference data may comprise average water consumption or average number of shower usage within a given time unit. The data received from the apparatus 100 may be compared to the reference data and displayed. This way the user may receive indication how the shower usage compares to reference data. The reference data may also comprise data related to environmental usage of water. For example the user may be given data how the amount of water and energy used in the shower relates to environment.

In an embodiment, the external device may communicate with more than one apparatus and gather data from more than one apparatus. This information may be processed in the external device or in a server. For example, in a facility comprising a large number of showers, such as a hotel, the usage of water in different hotel rooms may be easily monitored without any fixed installations in the water pipes.

In an embodiment, apparatuses 100 may be installed to all water taps and showers within a hotel room. Thus, the total amount water spent in the room may be monitored and stored in a server. This information may be used in billing or in a bonus system of the hotel, for example.

Figure 7 illustrates an example helping to understand the invention,. The figure illustrates a simplified example of the external apparatus or device 400, 402. In some embodiments, the apparatus or device may be a mobile phone, a tablet, a personal computer or a router, or a part of such an apparatus.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus 400, 402 of the example includes a control circuitry 700 configured to control at least part of the operation of the apparatus.

The apparatus may comprise a memory 702 for storing data. Furthermore the memory may store software 704 executable by the control circuitry 700. The memory may be integrated in the control circuitry.

The apparatus comprises one or more transceivers 706. The one or more transceivers are operationally connected to the control circuitry 700. They may be connected to an antenna arrangement (not shown). At least one of the transceivers 706 may be a Bluetooth® transceiver or a Wireless Local Area Network (WLAN) transceiver based on IEEE 802.11 standard, for example. IEEE refers to the Institute of Electrical and Electronics Engineers. Bluetooth® and WLAN are merely illustrative examples as any other transmission technology may also be used as well. The apparatus may also comprise a transceiver capable of communicating with cellular systems such as the universal mobile telecommunications system (UMTS) radio access network (UTRAN), long term evolution (LTE, known also as E-UTRA), long term evolution advanced (LTE-A), 5th generation mobile networks, and global system for mobile communication (GSM), for example.

The apparatus may further comprise interface circuitry 708 configured to connect the apparatus to other devices and network elements of communication system, for example to other corresponding apparatuses and networks. This applies especially if the apparatus is a computer or a router.

The apparatus may further comprise user interface 710 operationally connected to the control circuitry 700. The user interface may comprise a display, a keyboard or keypad, a microphone and a speaker, for example. This applies especially if the apparatus is a mobile phone, a tablet or a computer.

In an embodiment, the software 704 may comprise a computer program comprising program code means adapted to cause the control circuitry 700 of the apparatus to control the transceiver 706 to receive one or more entries, each entry comprising a time interval, an amount of fluid associated with the time interval and a temperature associated with the fluid, store the received one or more entries in the memory 702, obtain information related to the properties and pricing information of the fluid and energy consumption, and calculate for one or more entries an energy and/or price information value on the basis of a received and obtained information.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, which may comprise a working memory (RAM), a central processing unit (CPU), and a system clock. The CPU may comprise a set of registers, an arithmetic logic unit, and a controller. The controller is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the appended claims.

## Claims

1. An apparatus in a facility connectable to the end of a pipe where water is flowing, the apparatus comprising:
a generator (106) configured to generate electric power from the water passing through the generator and means for storing electricity generated by the generator,
a first sensor (112) configured to measure the temperature of the water,
a processing unit and a memory (120) operationally connected to the processing unit;
a wireless transceiver (122) operationally connected to the processing unit;
the processing unit (116) being configured to receive power from the generator and control the transceiver to transmit data to and receive data from an external device and other similar apparatuses;
wherein the processing unit is configured to detect that water starts flowing in the pipe at a first time instant on the basis of a signal from the generator;
initiate after the detection
reception from the first sensor information on the temperature of the water,
determination of the amount of water flowing in the pipe from the amount of electricity generated by the generator, and
measurement of the time elapsed since the first time instant;
detect that fluid stops flowing in the pipe at a second time instant on the basis of a lack of signal from the generator;
calculate the total amount of fluid that flowed through the pipe between the first and the second time instants;
determine the temperature of the fluid between the first and the second time : instants;
store the determined values and the time elapsed between the first and the second time instants as an entry in the memory;
control the transceiver to receive information on the total volume or capacity of the warm water storage of the facility from the external device ;
if the apparatus is the only one using warm water, activate an indicator when the used amount of warm water approaches the capacity of the warm water storage, and
if there are more than one apparatus in the facility, control the transceiver to communicate with said other apparatuses for exchanging information about the used amount of warm water and the capacity of the warm water storage.

2. The apparatus according to claim 1, the processing unit being further configured to
connect to a transceiver of the external device;
control the transceiver to transmit one or more entries stored in the memory to the external device.

3. The apparatus according to any preceding claim, apparatus further comprising
one or more indicators;
the processing unit being configured to activate one or more indicators on the basis of determined information or when the time elapsed between the first and the second time instants exceeds a given threshold.

4. The apparatus according to claim 3, the processing unit being configured to receive via the transceiver given thresholds and store the thresholds in the memory.

5. The apparatus according to any preceding claim, the processing unit being configured to receive from the means for storing electricity information on the available power stored in the means for storing electricity and control the operation of the apparatus on the basis of the information.

6. The apparatus according to any preceding claim, the apparatus being removably connectable to a flexible pipe of a shower in the place of a shower head.

7. A method for determining water consumption of water flowing through a pipe of an apparatus in a facility the method comprising:
generating (204) electric power with a generator connected to the pipe from water passing through the generator and storing the electricity,
measuring (206)the temperature of the water with a first sensor,
controlling (220) a wireless transceiver to transmit data to and to receive data from an external device and other similar apparatuses, wherein the method further comprises
detecting (202) that water starts flowing in the pipe at a first time instant on the basis of a signal from the generator;
measuring (208) the amount of water flowing in the pipe based on the amount of electricity generated by the generator;
measuring (210) the time elapsed since the water started continuously flowing through the pipe;
detecting (214) that water stops flowing in the pipe at a second time instant on the basis of a lack of signal from the generator;
determining (216) the amount of water that flowed through the pipe between the first and the second time instants;
determining (216) the temperature of the water between the first and the second time instants;
storing (218) the determined values and the time elapsed between the first and the second time instants as an entry in a memory;
controlling the transceiver to receive information from the external device on the total volume or capacity of the warm water storage of the facility ;
if the apparatus is the only one using warm water, activate an indicator when the used amount of warm water approaches the capacity of the warm water storage, and
if there are more than one apparatus in the facility, controlling the transceiver to communicate with said other apparatuses for exchanging information about the used amount of warm water and the capacity of the warm water storage.

8. The method according to claim 7, further comprising:
connecting to a transceiver of the external device;
controlling the transceiver to transmit one or more entries stored in the memory to the external device.

## Patentansprüche

1. Einrichtung in einer Anlage, die mit dem Ende einer Leitung verbindbar ist, in der Wasser fließt, wobei die Einrichtung Folgendes umfasst:
einen Generator (106), der dazu ausgelegt ist, aus dem Wasser, das durch den Generator läuft, elektrischen Strom zu erzeugen, und ein Mittel zum Speichern von Elektrizität, die vom Generator erzeugt wird,
einen ersten Sensor (112), der dazu ausgelegt ist, die Temperatur des Wassers zu messen,
eine Verarbeitungseinheit und einen Speicher (120), der mit der Verarbeitungseinheit wirkverbunden ist;
einen drahtlosen Sendeempfänger (122), der mit der Verarbeitungseinheit wirkverbunden ist;
wobei die Verarbeitungseinheit (116) dazu ausgelegt ist, Strom vom Generator zu empfangen und den Sendeempfänger derart zu steuern, dass er Daten zu einer externen Vorrichtung und anderen ähnlichen Einrichtungen überträgt und von denselben empfängt;
wobei die Verarbeitungseinheit zu Folgendem ausgelegt ist
Detektieren auf Basis eines Signals vom Generator, dass Wasser zu einer ersten Zeitinstanz in der Leitung zu fließen beginnt;
nach der Detektion Initiieren von Folgendem
Empfang von Informationen zur Temperatur des Wassers vom ersten Sensor,
Bestimmung der Menge Wasser, das in der Leitung fließt, anhand der Menge Elektrizität, die vom Generator erzeugt wird, und
Messung der Zeit, die seit der ersten Zeitinstanz vergangen ist;
Detektieren auf Basis eines fehlenden Signals vom Generator, dass ein Fluid zu einer zweiten Zeitinstanz in der Leitung zu fließen aufhört;
Berechnen der Gesamtmenge Fluid, die zwischen der ersten und der zweiten Zeitinstanz durch die Leitung geflossen ist;
Bestimmen der Temperatur des Fluids zwischen der ersten und der zweiten Zeitinstanz;
Speichern der bestimmten Werte und der zwischen der ersten und der zweiten Zeitinstanz vergangenen Zeit als einen Eintrag im Speicher;
Steuern des Sendeempfängers derart, dass er Informationen über das Gesamtvolumen oder die Kapazität des Warmwasserbestands der Anlage von der externen Vorrichtung empfängt;
wenn die Einrichtung die einzige ist, die Warmwasser verwendet, Aktivieren einer Anzeige, wenn sich die verwendete Menge Warmwasser der Kapazität des Warmwasserbestands nähert, und
wenn es mehr als eine Einrichtung in der Anlage gibt, Steuern des Sendeempfängers derart, dass er zum Austauschen von Informationen über die verwendete Menge Warmwasser und die Kapazität des Warmwasserbestands mit den anderen Einrichtungen kommuniziert.

2. Einrichtung nach Anspruch 1, wobei die Verarbeitungseinheit ferner zu Folgendem ausgelegt ist
Verbinden mit einem Sendeempfänger der externen Vorrichtung;
Steuern des Sendeempfängers derart, dass er einen oder mehrere Einträge, die im Speicher der externen Vorrichtung gespeichert sind, überträgt.

3. Einrichtung nach einem der vorhergehenden Ansprüche, wobei die Einrichtung ferner Folgendes umfasst
eine oder mehrere Anzeigen;
wobei die Verarbeitungseinheit dazu ausgelegt ist, auf Basis von bestimmten Informationen oder wenn die Zeit, die zwischen der ersten und der zweiten Zeitinstanz vergangen ist, einen gegebenen Schwellwert überschreitet, eine oder mehrere Anzeigen zu aktivieren.

4. Einrichtung nach Anspruch 3, wobei die Verarbeitungseinheit dazu ausgelegt ist, gegebene Schwellwerte via den Sendeempfänger zu empfangen und die Schwellwerte im Speicher zu speichern.

5. Einrichtung nach einem der vorhergehenden Ansprüche, wobei die Verarbeitungseinheit dazu ausgelegt ist, vom Mittel zum Speichern von Elektrizität Informationen über den verfügbaren Strom, der im Mittel zum Speichern von Elektrizität verfügbar ist, zu empfangen und den Betrieb der Einrichtung auf Basis der Informationen zu steuern.

6. Einrichtung nach einem der vorhergehenden Ansprüche, wobei die Einrichtung mit einer flexiblen Leitung einer Dusche am Ort eines Duschkopfs entfernbar verbindbar ist.

7. Verfahren zum Bestimmen eines Wasserverbrauchs von Wasser, das durch eine Leitung einer Einrichtung in einer Anlage fließt, wobei das Verfahren Folgendes umfasst:
Erzeugen (204) von elektrischem Strom mit einem Generator, der mit der Leitung verbunden ist, aus Wasser, das durch den Generator geleitet wird, und Speichern der Elektrizität,
Messen (206) der Temperatur des Wassers mit einem ersten Sensor,
Steuern (220) eines drahtlosen Sendeempfängers derart, dass er Daten zu einer externen Vorrichtung und anderen ähnlichen Einrichtungen überträgt und von denselben empfängt,
wobei das Verfahren ferner Folgendes umfasst
Detektieren (202) auf Basis eines Signals vom Generator, dass Wasser zu einer ersten Zeitinstanz in der Leitung zu fließen beginnt;
Messen (208) der Menge Wasser, das in der Leitung fließt, auf Basis der Menge Elektrizität, die vom Generator erzeugt wird;
Messen (210) der Zeit, die vergangen ist, seit das Wasser begann, kontinuierlich durch die Leitung zu fließen;
Detektieren (214) auf Basis eines fehlenden Signals vom Generator, dass Wasser zu einer zweiten Zeitinstanz in der Leitung zu fließen aufhört;
Bestimmen (216) der Menge Wasser, die zwischen der ersten und der zweiten Zeitinstanz durch die Leitung geflossen ist;
Bestimmen (216) der Temperatur des Wassers zwischen der ersten und der zweiten Zeitinstanz;
Speichern (218) der bestimmten Werte und der zwischen der ersten und der zweiten Zeitinstanz vergangenen Zeit als einen Eintrag in einem Speicher;
Steuern des Sendeempfängers derart, dass er Informationen über das Gesamtvolumen oder die Kapazität des Warmwasserbestands der Anlage von der externen Vorrichtung empfängt;
wenn die Einrichtung die einzige ist, die Warmwasser verwendet, Aktivieren einer Anzeige, wenn sich die verwendete Menge Warmwasser der Kapazität des Warmwasserbestands nähert, und
wenn es mehr als eine Einrichtung in der Anlage gibt, Steuern des Sendeempfängers derart, dass er zum Austauschen von Informationen über die verwendete Menge Warmwasser und die Kapazität des Warmwasserbestands mit den anderen Einrichtungen kommuniziert.

8. Verfahren nach Anspruch 7, das ferner Folgendes umfasst:
Verbinden mit einem Sendeempfänger der externen Vorrichtung;
Steuern des Sendeempfängers derart, dass er einen oder mehrere Einträge, die im Speicher der externen Vorrichtung gespeichert sind, überträgt.

## Revendications

1. Appareil dans une installation, pouvant être raccordé à l'extrémité d'un tuyau où s'écoule de l'eau, l'appareil comprenant :
un générateur (106) conçu pour produire de l'énergie électrique à partir de l'eau passant à travers le générateur et un moyen destiné à stocker l'électricité produite par le générateur ;
un premier capteur (112) conçu pour mesurer la température de l'eau ;
une unité de traitement et une mémoire (120) fonctionnellement connectée à l'unité de traitement ;
un émetteur-récepteur sans fil (122) fonctionnellement connecté à l'unité de traitement ;
l'unité de traitement (116) étant conçue pour recevoir de l'énergie en provenance du générateur et pour commander l'émetteur-récepteur afin de transmettre des données à un dispositif externe et à d'autres appareils similaires et d'en recevoir des données ;
dans lequel l'unité de traitement est conçue pour :
détecter que l'eau commence à s'écouler dans le tuyau à un premier instant temporel, sur la base d'un signal provenant du générateur ;
déclencher après la détection :
la réception, en provenance du premier capteur, d'informations sur la température de l'eau,
la détermination de la quantité d'eau s'écoulant dans le tuyau d'après la quantité d'électricité produite par le générateur, et
la mesure du temps écoulé depuis le premier instant temporel ;
détecter que le fluide cesse de s'écouler dans le tuyau à un second instant temporel, sur la base d'une absence de signal en provenance du générateur ;
calculer la quantité totale de fluide qui s'est écoulé à travers le tuyau entre les premier et second instants temporels ;
déterminer la température du fluide entre les premier et second instants temporels ;
stocker les valeurs déterminées et le temps écoulé entre les premier et second instants temporels en tant qu'entrée dans la mémoire ;
commander l'émetteur-récepteur pour recevoir des informations sur le volume total ou la capacité du stockage d'eau chaude de l'installation, en provenance du dispositif externe ;
si l'appareil est le seul à utiliser de l'eau chaude, activer un indicateur lorsque la quantité d'eau chaude utilisée se rapproche de la capacité du stockage d'eau chaude, et
s'il existe plus d'un appareil dans l'installation, commander l'émetteur-récepteur pour communiquer avec lesdits autres appareils afin d'échanger des informations au sujet de la quantité d'eau chaude utilisée et de la capacité du stockage d'eau chaude.

2. Appareil selon la revendication 1, l'unité de traitement étant conçue en outre pour :
se connecter à un émetteur-récepteur du dispositif externe ;
commander l'émetteur-récepteur pour transmettre une ou plusieurs entrée(s) stockée(s) dans la mémoire au dispositif externe.

3. Appareil selon l'une quelconque des revendications précédentes, l'appareil comprenant en outre :
un ou plusieurs indicateur(s) ;
l'unité de traitement étant conçue pour activer un ou plusieurs indicateur(s) sur la base d'informations déterminées ou lorsque le temps écoulé entre les premier et second instants temporels dépasse un seuil donné.

4. Appareil selon la revendication 3, l'unité de traitement étant conçue pour recevoir par l'intermédiaire de l'émetteur-récepteur des seuils donnés et pour stocker les seuils dans la mémoire.

5. Appareil selon l'une quelconque des revendications précédentes, l'unité de traitement étant conçue pour recevoir en provenance du moyen destiné à stocker de l'électricité des informations sur la puissance disponible stockée dans le moyen destiné à stocker de l'électricité et pour commander le fonctionnement de l'appareil sur la base des informations.

6. Appareil selon l'une quelconque des revendications précédentes, l'appareil pouvant être raccordé de façon amovible à un tuyau flexible de douche à la place d'une pomme de douche.

7. Procédé permettant de déterminer la consommation d'eau de l'eau s'écoulant à travers un tuyau d'appareil dans une installation, le procédé comprenant les étapes suivantes :
produire (204) de l'énergie électrique à l'aide d'un générateur raccordé au tuyau, à partir de l'eau passant à travers le générateur et stocker l'électricité produite,
mesurer (206) la température de l'eau à l'aide d'un premier capteur,
commander (220) un émetteur-récepteur sans fil pour transmettre des données à un dispositif externe et à d'autres appareils similaires et pour en recevoir des données,
dans lequel le procédé comprend en outre les étapes suivantes :
détecter (202) que l'eau commence à s'écouler dans le tuyau à un premier instant temporel, sur la base d'un signal provenant du générateur ;
mesurer (208) la quantité d'eau s'écoulant dans le tuyau sur la base de la quantité d'électricité produite par le générateur ;
mesurer (210) le temps écoulé depuis que l'eau a commencé à s'écouler en continu à travers le tuyau ;
détecter (214) que l'eau cesse de s'écouler dans le tuyau à un second instant temporel, sur la base d'une absence de signal en provenance du générateur ;
déterminer (216) la quantité d'eau qui s'est écoulée à travers le tuyau entre les premier et second instants temporels ;
déterminer (216) la température de l'eau entre les premier et second instants temporels ;
stocker (218) les valeurs déterminées et le temps écoulé entre les premier et second instants temporels en tant qu'entrée dans une mémoire ;
commander l'émetteur-récepteur pour recevoir du dispositif externe des informations sur le volume total ou la capacité du stockage d'eau chaude de l'installation ;
si l'appareil est le seul à utiliser de l'eau chaude, activer un indicateur lorsque la quantité d'eau chaude utilisée se rapproche de la capacité du stockage d'eau chaude, et
s'il existe plus d'un appareil dans l'installation, commander l'émetteur-récepteur pour communiquer avec lesdits autres appareils afin d'échanger des informations au sujet de la quantité d'eau chaude utilisée et de la capacité du stockage d'eau chaude.

8. Procédé selon la revendication 7, comprenant en outre les étapes suivantes :
se connecter à un émetteur-récepteur du dispositif externe ;
commander l'émetteur-récepteur pour transmettre une ou plusieurs entrée(s) stockée(s) dans la mémoire au dispositif externe.
